# EUROPEAN PATENT APPLICATION

(11) **EP 4 813 573 A1**
(43) Date of publication of application: **30.09.2026**
(21) Application number: 26167353.7
(22) Date of filing: 24.03.2026
(51) Int. Cl.: B25B 11/00, B23B 31/107, B23Q 3/10

(54) **CLAMPING DEVICE**

(30) Priority: 26.03.2025 IT 202500006312
(71) Applicant: FCS System Srl, 31032 Casale sul Sile (TV) (IT)
(72) Inventor: CALZAVARA, Andrea, 31057 Silea (TV) (IT); BAZZO, Enrico, 31046 Oderzo (TV) (IT)
(74) Representative: Gallo, Luca

(57) **Abstract**

Clamping device comprising two tie-rod elements (2), each of which is provided with a retaining portion (3) and with a shank (4), and a base body (5) provided with two housing seats (6), each of which is susceptible of receiving the retaining portion (3) of the corresponding tie-rod element (2). Furthermore, the base body (5) comprises two guide channels (8) into which two retaining elements (9) are slidably inserted which are operable to place themselves against the retaining portion (3) of the corresponding tie-rod element (2), thereby locking it. The housing seats (6) of the base body (5) are communicating and the retaining portion (3) of each tie-rod element (2) is provided with a shoulder (10) alongside the shoulder (10) of the other tie-rod element (2) and is susceptible of receiving the corresponding retaining element (9) against it.

## Description

### Field of application

The present invention relates to a clamping device, according to the preamble of the independent claim 1, which is advantageously arranged to hold a semifinished product in position with respect to an abutment base.

In particular, the present clamping device is advantageously used in the mechanical engineering industry to hold workpieces in position that are intended to undergo various machining operations.

More in particular, the clamping device that is the subject matter of the present invention is advantageously usable for holding in position with respect to the abutment base, in particular of a machine tool (e.g. of the CNC type), a body to be machined, which is advantageously made of metallic material, or composite material, or any other material. The invention therefore falls within the context of the industrial field of the precision mechanics.

### State of the art

In the field of machining mechanical components through turning, milling, drilling operations etc. there is the particular need to hold, in a stable manner, the semifinished products to be machined.

To this aim, clamping devices are known which are provided with a base body, which is intended to be removably fixed, on one side, to the semifinished product to undergo the machining operations and, on the other side, to an abutment base forming part of a machine tool arranged to perform the machining operations on the semifinished product. In order to removably fix the base body to the semifinished product and to the abutment base of the machine tool, it is known to use two tie-rod elements, each of which is provided with a coupling head and a threaded shank extending starting from the coupling head.

One of these tie rods has its threaded shank inserted into a specific threaded hole in the semifinished product and its coupling head inserted into a housing seat opening onto an upper face of the base body. The other of these tie rods has its threaded shank inserted into a threaded hole belonging to an ordered matrix of threaded holes made in the abutment base of the machine tool, and its coupling head inserted into another housing seat of the base body, which housing seat opens onto a lower face of the base body opposite the upper face.

Furthermore, for each housing seat of the base body, a channel is arranged which intersects the corresponding housing seat and into which two jaws of a pair of jaws are inserted diametrically opposed to one another with respect to the aforementioned housing seat. The jaws of each pair can be actuated to close onto the coupling head of the tie-rod element inserted into the corresponding housing seat. In this way, by actuating to close the jaws associated with the housing seat where the tie-rod element connected to the abutment base of the machine tool is placed, it is possible to lock the base body to the abutment base. Furthermore, by actuating to close the jaws associated with the housing seat where the tie-rod element connected to the semifinished product is placed, it is possible to lock the semifinished product to the base body, which is in turn locked to the abutment base.

An example of the clamping device discussed above is described in US 2013/175751 A1. However, the clamping device of the type described above has, in practice, proved not to be without drawbacks.

The main drawback lies in the complexity and laborious tasks required to perform the various operations by means of which the semifinished product is locked to the abutment base by means of the known clamping device. In fact, an operator must insert the threaded shank of a tie-rod element into a threaded hole of the abutment base of the machine tool and then position the base body of the clamping device on the abutment base so that the coupling head of the tie-rod element be inserted into the housing seat made on the lower face of the base body itself. The operator then proceeds to actuate the clamping jaws associated with this housing seat so that they close onto the coupling head of the tie-rod element connected to the abutment base. Once the base body has been locked to the abutment base of the machine tool, the operator inserts the threaded shank of the other tie-rod element into a threaded hole in the semifinished product and lowers, for example using an overhead crane, the semifinished product so that the coupling head of the tie-rod element connected to it is inserted into the housing seat of the base body made on the upper face of this base body. Finally, the operator actuates the clamping jaws associated with the housing seat opening onto the upper face of the base body so that they lock the coupling head of the tie-rod element connected to the semifinished product, thereby locking the tie-rod element on the base body of the clamping device. Therefore, in view of all these required operations, the use of the known device to lock the semifinished product to the abutment base is particularly time-consuming. Furthermore, this problem is particularly evident when bulky and/or particularly heavy semifinished products need to be held in position, which require to be locked by means of multiple clamping devices of the type briefly described above.

### Presentation of the invention

In this situation, the problem underlying the present invention is therefore to overcome the drawbacks of the prior art, by providing a clamping device, which allows a semifinished product to be locked onto the abutment base of a machine tool by performing a reduced number of operations.

A further objective of the present invention is to provide a clamping device, which allows a semifinished product to be locked onto the abutment base of a machine tool in a quick and easy way.

A further object of the present invention is to provide a clamping device, which has reduced sizes, particularly in height.

A further object of the present invention is to provide a clamping device, which is provided with a reduced number of components.

A further object of the present invention is to provide a clamping device, which is simple and cheap to be manufactured.

A further object of the present invention is to provide a clamping device, which is completely reliable in operation.

### Brief description of the drawings

The technical characteristics of the invention, according to the above objects, are clearly evident from the content of the below claims, and the advantages thereof will be more evident in the detailed description that follows, made with reference to the attached drawings, which represent a purely illustrative and non-limiting embodiment, wherein:

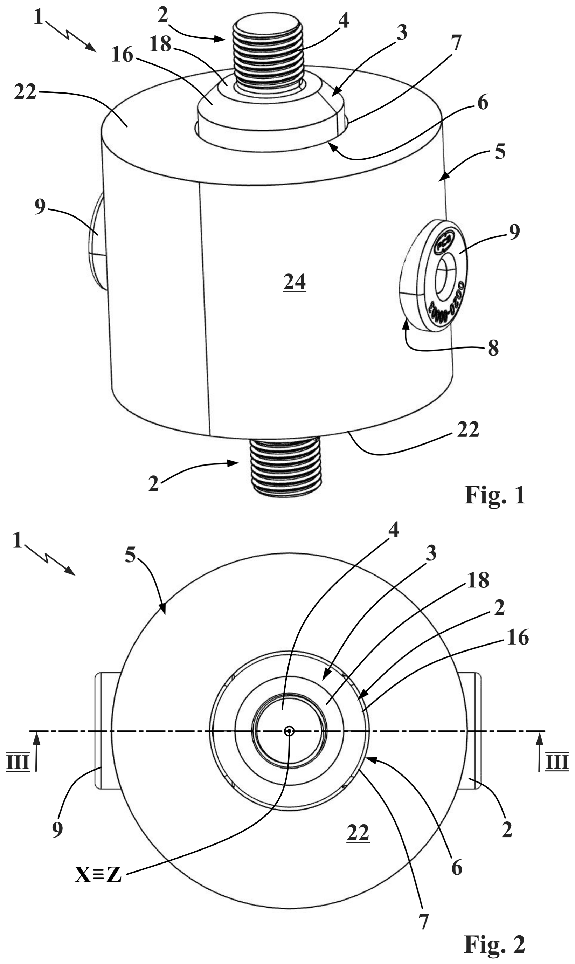

- Fig. 1 shows a perspective view of a clamping device that is subject matter of the present invention, according to a first embodiment;
- Fig. 2 shows a top view of the clamping device of figure 1;

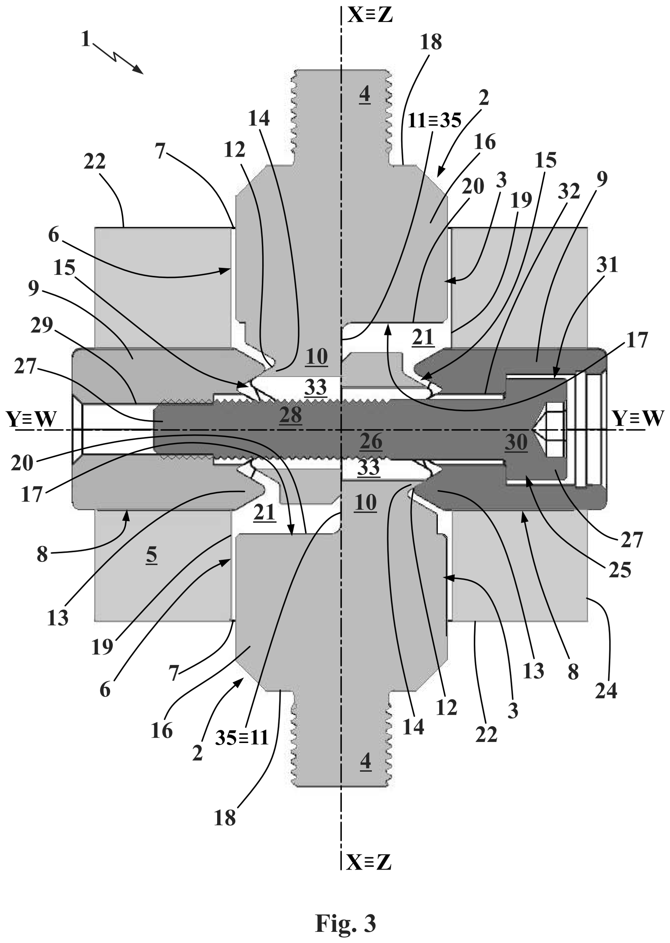

- Fig. 3 shows a sectional view of the clamping device of figure 1, wherein the section is taken along line III-III of figure 2;

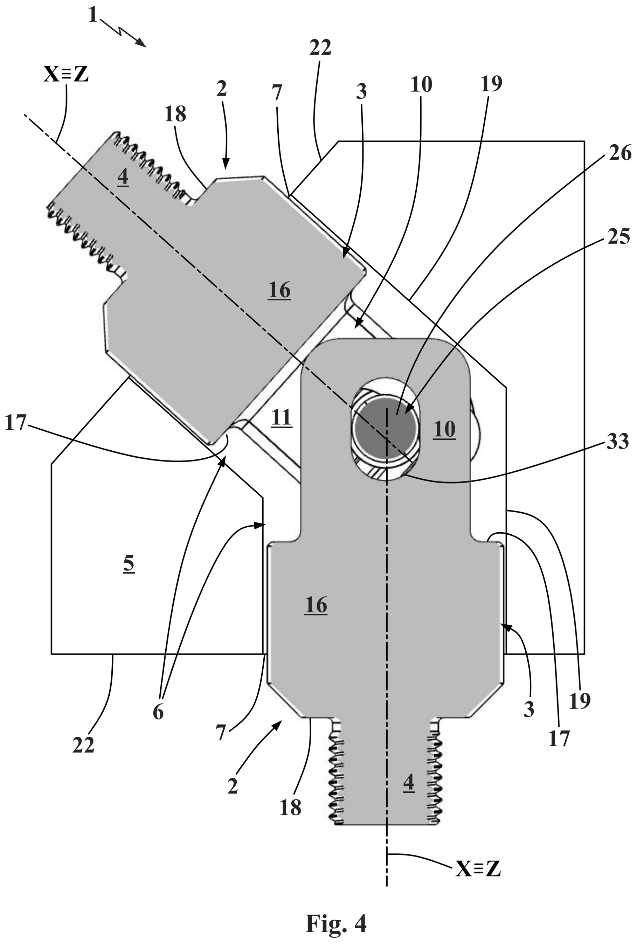

- Fig. 4 shows a side sectional view of a clamping device that is subject matter of the present invention, according to a second embodiment, wherein the side section is taken in a plane parallel to a plane containing reference axes, inclined to each other, of housing seats made on a base body;

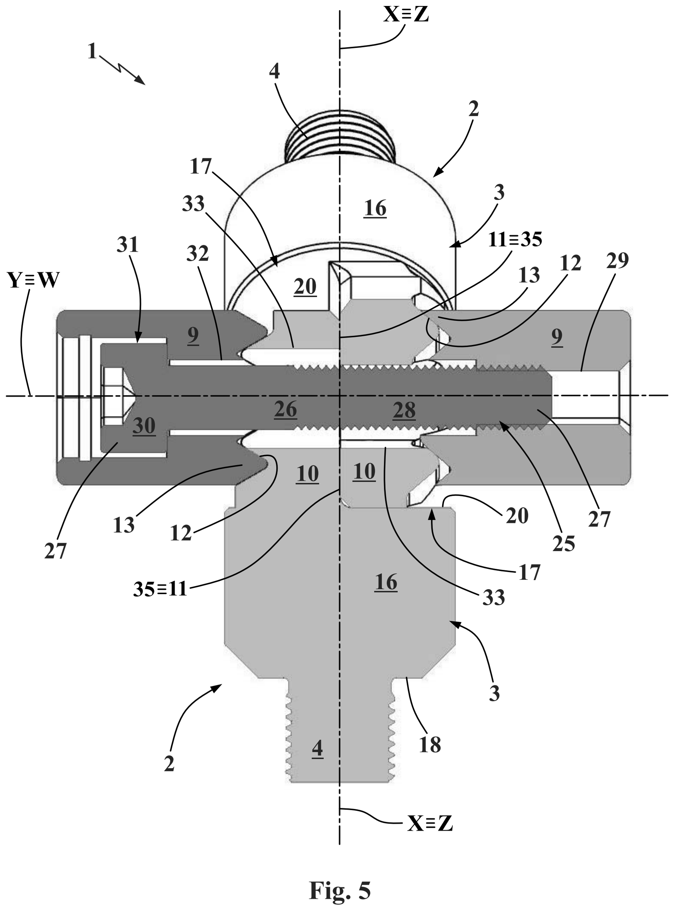

- Fig. 5 shows a side section view of the clamping device of figure 4, wherein the base body is not illustrated in order to better show other components, and the side section is taken in a plane orthogonal to that along which the side section of figure 4 is taken;

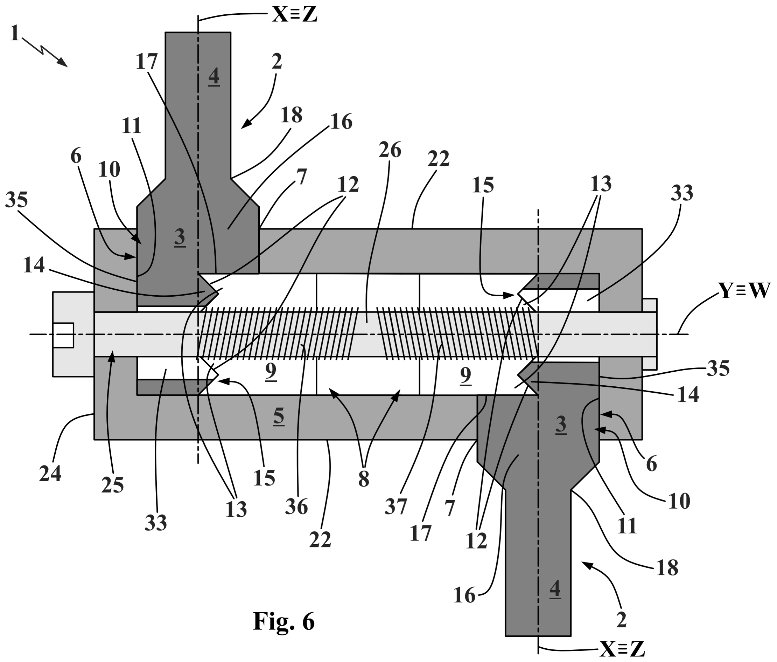

- Fig. 6 shows a side section view of a clamping device that is subject matter of the present invention, according to a third embodiment, wherein the side section is taken along a plane containing the reference axes, parallel to each other, of housing seats made on a base body;

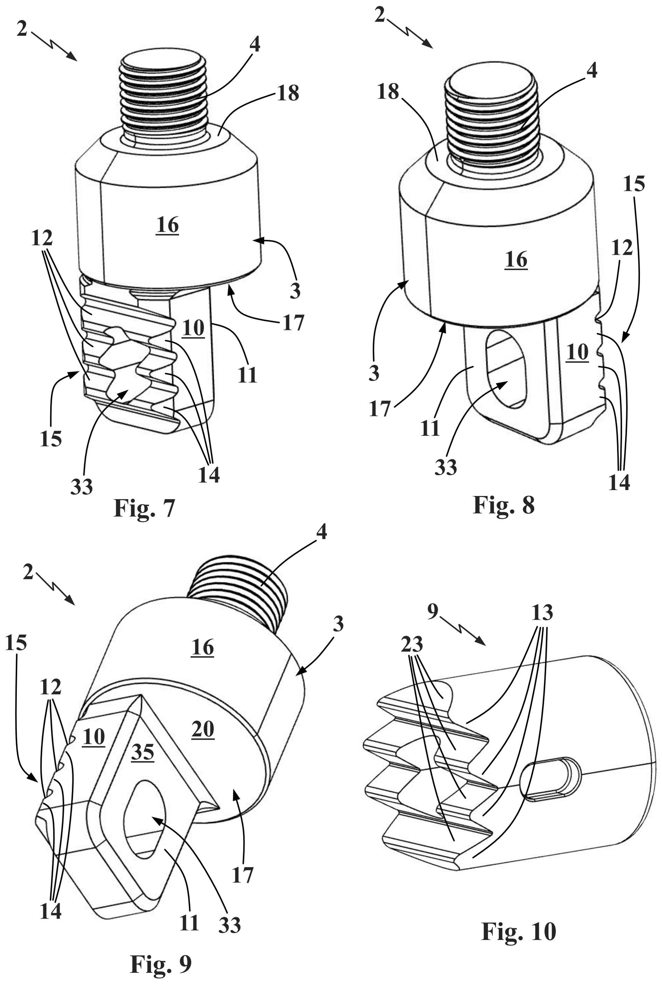

- Figs. 7, 8 and 9 show different perspective views of a tie-rod element belonging, indifferently, to the clamping device of figure 1 or the clamping device of figure 4;
- Fig. 10 shows a perspective view of a retaining element belonging, indifferently, to the clamping device of figure 1, the clamping device of figure 4 or the clamping device of figure 6.

### Detailed description of a preferred embodiment

With reference to the accompanying drawings, a clamping system according to the present invention is indicated as a whole with 1.

This clamping device 1 is advantageously intended to be used to hold a semifinished product in position with respect to an abutment base, and in particular is intended to hold the semifinished product itself at a predetermined position that is available for the machining operations to which it is intended to be subjected.

More in detail, the abutment base can belong to a machine tool, such as a CNC machine tool, arranged to subject the semifinished product to machining operations, such as chip removal (milling, surface finishing, drilling, etc.).

Differently, the abutment base can be a separate component from the operating machine, which component is intended to be installed adjacently to the latter and is arranged to hold the semifinished product in position, by means of the clamping device 1 that is the subject matter of the present invention, with respect to a tool device of the aforementioned machine tool.

According to the invention, the clamping device 1 comprises two tie-rod elements 2, each of which is provided with a retaining portion 3 and a shank 4 which extends starting from the retaining portion 3.

Furthermore, the clamping device 1 comprises a base body 5, which is provided with two housing seats 6, one for each tie-rod element 2.

Each housing seat 6 extends along a reference axis X thereof, has an access opening 7 thereof and is susceptible of receiving within it at least part of the retaining portion 3 of the corresponding tie-rod element 2.

Advantageously, the aforementioned base body 5 is provided with at least two distinct outer faces 22, which are, each, transverse (in particular orthogonal) with respect to the reference axis X of a housing seat 6 and, furthermore, the access opening 7 of each housing seat 6 is made on a corresponding outer face 22 of the base body 5.

Preferably, the base body 5 is provided with a side surface 24 which connects the two outer faces 22.

Furthermore, the base body 5 comprises two guide channels 8, one for each housing seat 6.

Each guide channel 8 extends along an extension axis Y thereof transverse to the reference axis X of the corresponding housing seat 6, and communicates with the corresponding housing seat 6.

The clamping device 1 also comprises two retaining elements 9, one for each guide channel 8.

Each retaining element 9 is slidably inserted into the corresponding guide channel 8 along the extension axis Y of the guide channel 8 between a release position, in which the retaining element 9 is spaced from the retaining portion 3 of the tie-rod element 2 inserted into the corresponding housing seat 6, and a retaining position, in which the retaining element 9 protrudes from the corresponding guide channel 8 into the corresponding housing seat 6 to place itself against the retaining portion 3 of the corresponding tie-rod element 2, locking the retaining portion 3 in the corresponding housing seat 6.

Preferably, each guide channel 8 opens onto the side surface 24 of the base body 5, such that each retaining element 9 can be easily inserted into the corresponding guide channel 8 from the outside.

Advantageously, the extension axis Y of each guide channel 8 is perpendicular to the reference axis X of the corresponding housing seat 6, such to allow the retaining element 9 to cooperate more easily with the retaining portion 3 of the corresponding tie-rod element 2.

According to the idea underlying the present invention, the housing seats 6 are communicating and, furthermore, the retaining portion 3 of each tie-rod element 2 is provided with a shoulder 10 alongside the shoulder 10 of the retaining portion 3 of the other tie-rod element 2 and susceptible of receiving against itself the corresponding retaining element 9 in the retaining position.

Advantageously, the extension axes Y of the guide channels 8 are aligned with one another, such that, when the retaining elements 9 are moved from the release position to the retaining position, no torsional moments are exerted on the tie-rod elements 2.

More in detail, the provision of housing seats 6 communicating with each other allows at least one part of each tie-rod element 2, namely the shoulder 10 of the retaining portion 3, to be placed alongside another part of the other tie-rod element 2 and thereby allows both retaining elements 9 to be actuated to move together from the release position to the retaining position, simultaneously locking both tie-rod elements 2 by means of a single operation.

Furthermore, the provision of two communicating housing seats 6 in which the retaining portions 3 of the two tie-rod elements 2 are placed with their shoulders 10 alongside each other, in addition to allowing an easier and quicker locking of both tie-rod elements 2 by means of a single movement operation of the retaining elements 9, allows the total number of components of the clamping device 1 according to the invention to be reduced, allowing two tie-rod elements 2 to be locked at the same time by using only two retaining elements 9 (rather than using four jaws, two per tie-rod element, as required in the prior art).

Furthermore, the use of the two communicating housing seats 6 allows the overall sizes, particularly in height, of the present clamping device 1 to be reduced, because the shoulders 10 of the retaining portions 3 of the tie-rod elements 2 are alongside each other so that they can be locked together by the two retaining elements 9 when they are moved from the release position to the retaining position.

In accordance with the embodiments illustrated in the attached figures, the outer faces 22 of the base body 5 are both flat and are, one, intended to be placed in abutment against an abutment base (for example, belonging to a machine tool, such as a CNC machine tool) and, the other, intended to be placed in abutment against a semifinished product that must be held in position on the abutment base in order to undergo one or more machining operations.

In this case, in order to lock the semifinished product in position on the abutment base by means of the clamping device 1 according to the invention, it is sufficient to:
- insert the shank 4 of a tie-rod element 2 into a hole of the abutment base to connect this tie-rod element 2 to the abutment base,
- place an outer face 22 of the base body 5 on the abutment base so that the retaining portion 3 of the tie-rod element 2 connected to the abutment base is inserted into the housing seat 6 having its own access opening 7 on this outer face 22,
- insert the shank 4 of the other tie-rod element 2 into a hole in the semifinished product to connect the abovementioned tie-rod element 2 to the semifinished product itself,
- place the semifinished product on the other outer face 22 of the base body 5 (not in contact with the abutment base) to insert the retaining portion 3 of the tie-rod element 2 connected to the semifinished product into the housing seat 6 having its own access opening 7 on this outer face 22 (not in contact with the abutment base),
- actuate the retaining elements 9 to move from the release position to the retaining position in order to simultaneously lock, due to the fact that the housing seats 6 are communicating with each other, the shoulders 10 of the retaining portions 3 of the two tie-rod elements 2 and thereby lock, by means of them, the semifinished product onto the abutment base.

In this way, with a single operation of moving the two retaining elements 9 from the release position to the retaining position, it is possible to lock both tie-rod elements 2 at the same time and, thus, to secure the semifinished product to the abutment base by means of the present clamping device 1.

In accordance with the embodiments illustrated, the shanks 4 of the tie-rod elements 2 are preferably at least partially threaded, in particular to cause that the tie-rod elements 2 can be fixed to the abutment base and to the semifinished product simply by screwing.

Advantageously, the shoulder 10 of the retaining portion 3 of each tie-rod element 2 is provided with an abutment face 11 directed towards a corresponding block surface 35 and susceptible of being pushed towards the corresponding block surface 35 with the respective retaining element 9 in the retaining position.

In particular, each abutment face 11 is susceptible of being pushed directly against the corresponding block surface 35 when the respective retaining element 9 is in retaining position.

Differently, without departing from the scope of the present invention, each abutment face 11 is susceptible of being pushed towards the corresponding block surface 35 and against the latter indirectly through a corresponding spacer element.

In accordance with the first embodiment illustrated in the attached figures or indifferently in accordance with the second embodiment illustrated in the attached figures, the shoulders 10 of the retaining portions 3 of the tie-rod elements 2 are interposed between the retaining elements 9 and the abutment faces 11 of the shoulders 10 are directed towards each other.

In particular, in accordance with the first and second embodiments, each abutment face 11 is the block surface 35 for the other abutment face 11.

Preferably, in accordance with the first and second embodiments illustrated, the retaining elements 9 are spaced apart from each other in release position, so that each is spaced apart from the shoulder 10 of the retaining portion 3 of the corresponding tie-rod element 2, and are brought closer together in retaining position, so that each places itself against the shoulder 10 of the retaining portion 3 of the corresponding tie-rod element 2 and thus pushes the abutment faces 11 towards each other.

More in detail, the abutment faces 11 of the shoulders 10 of the retaining portions 3 of the tie-rod elements 2 are placed against each other and are susceptible of sliding over each other.

In particular, the abutment faces 11 have a substantially planar extension, so that they can slide with respect to each other (for example, when the retaining portions 3 of the tie-rod elements 2 are inserted into the corresponding housing seats 6 to assemble the present clamping device 1, or, after the clamping device 1 has been assembled, when the retaining elements 9 are moved into retaining position and exert, as will be better described below, a dragging force on the tie-rod elements 2, to pull components - such as the abutment base and the semifinished product that must be held in position with respect to the abutment base - connected to the tie-rod elements 2, into abutment against the base body 5).

Therefore, operatively, in accordance with the first and second embodiments (both having shoulders 10 which are alongside each other thanks to the communicating housing seats 6 and which are interposed between the retaining elements 9), it is possible to lock both retaining elements 2 with a single operation by actuating the retaining elements 9 to move from the release position to the retaining position, pushing the abutment faces 11 of the shoulders against each other, causing each abutment face 11 to act as block surface 35 for the other abutment face 11.

In accordance with the third embodiment illustrated in the attached figures and differently from the first and second embodiments, the retaining elements 9 are interposed between the shoulders 10 of the retaining portions 3 of the tie-rod elements 2 and the abutment faces 11 are directed towards opposite directions to each other.

Furthermore, in this third embodiment, the block surface 35 which corresponds to each abutment face 11 is placed to at least partially delimit the housing seat 6 into which the retaining portion 3 of the corresponding tie-rod element 2 is inserted.

In this way, the housing seats 6 communicate thanks to the guide channels 8 of the retaining elements 9, which are interposed between the shoulders 10, which are alongside each other, of the retaining portions 3 of the tie-rod elements 2.

Operatively, thus, the fact that the housing seats 6 communicate with each other thanks to the guide channels 8 of the retaining elements 9 interposed between the shoulders 10 allows both retaining elements 9 to be actuated simultaneously into retaining position to lock the shoulders 10 with their abutment faces 11 against the corresponding block surfaces 35.

In particular, the extension axes Y of the guide channels 8 are aligned and the block surfaces 35, which are placed to at least partially delimit the housing seats 6, are directed towards each other.

Preferably, in accordance with the third embodiment illustrated, the retaining elements 9 are brought closer together in release position, so that each is spaced from the shoulder 10 of the retaining portion 3 of the corresponding tie-rod element 2, and are spaced apart from each other in retaining position, so that each places itself against the shoulder 10 of the retaining portion 3 of the corresponding tie-rod element 2 and thereby pushes the abutment face 11 towards the corresponding block surface 35.

For example, to enable the production of the clamping device 1 in accordance with the third embodiment, it is possible to make, in the base body 5, a first through-hole which opens in two opposite opening points onto the side surface 24, and then to make two second holes, each extending starting from a corresponding outer face 22 until it intersects the first hole. In this way, the first hole defines the two guide channels 8 having their extension axes Y aligned with each other, into which it is possible to inset the two retaining elements 9 at the two opposite opening points on the side surface 24, and the second holes each define a corresponding housing seat 6. Furthermore, operatively, after the retaining elements 9 have been inserted, it is possible to close the two opposite opening points of the first hole by means of corresponding plugs, on which at least part of the block surface 35 extends, that is intended to receive against itself (directly or with the interposition of possible spacer elements) the abutment face 11 of the shoulder 10 of the retaining portion 3 of the corresponding tie-rod element 2 when the retaining elements 9 are in retaining position.

Preferably, the shoulder 10 of the retaining portion 3 of each tie-rod element 2 is provided with at least one dragging surface 12, which is directed towards the guide channel 8 into which the corresponding retaining element 9 is inserted and towards the access opening 7 of the housing seat 6 into which the retaining portion 3 of the corresponding tie-rod element 2 is inserted.

Furthermore, each dragging surface 12 is preferably inclined with respect to the extension axis Y of the guide channel 8 into which the corresponding retaining element 9 is inserted and with respect to the reference axis X of the housing seat 6 into which the retaining portion 3 of the corresponding tie-rod element 2 is inserted.

Furthermore, each retaining element 9 is advantageously provided with at least one engagement tooth 13 placed, when the retaining element 9 is in retaining position, against the dragging surface 12 of the shoulder 10 of the retaining portion 3 of the corresponding tie-rod element 2.

In this way, operatively, when the retaining elements 9 are moved from the release position to the retaining position, each retaining element 9 pushes the abutment face 11 of the shoulder 10 of the retaining portion 3 of the corresponding tie-rod element 2 against the corresponding block surface 35 (which, in the first and second embodiments, is the abutment face 11 of the other shoulder 10, whilst in the third embodiment it is placed to at least partially delimit the corresponding housing seat 6). Furthermore, operatively, when each retaining element 9 is in retaining position and the abutment faces 11 are each abutted, under pressure, against the corresponding block surface 35, the engagement tooth 13 exerts, thanks to the arrangement of the inclined dragging surface 12, a dragging force on the corresponding tie-rod element 2 which pulls the component (which, as will be better described below, can be the abutment base or the semifinished product that must be held in position with respect to the abutment base, or another component of the clamping device 1) connected to the aforementioned tie-rod element 2 against the base body 5, thereby locking this component (so that the dragging force exerted on the tie-rod elements 2 brings the components connected to the tie-rod elements 2 against the base body 5, the tie-rod elements 2 can undergo slight sliding at the abutment faces 11 on the block surfaces 35).

More in detail, the engagement tooth 13 of each retaining element 9 is provided with a thrust surface 23 directed to a direction opposite the access opening 7 of the housing seat 6 into which the retaining portion 3 of the corresponding tie-rod element 2 is inserted.

In accordance with an unillustrated embodiment, the thrust surface 23 of the engagement tooth 13 extends on a plane orthogonal with respect to the reference axis X of the housing seat 6 into which the retaining portion 3 of the corresponding tie-rod element 2 is inserted and terminates with an own thrust edge thereof, which is arranged to place itself in abutment against the corresponding dragging surface 12 when the retaining elements 9 are in retaining position.

Differently, as illustrated in the attached figures, the thrust surface 23 of the engagement tooth 13 is preferably inclined with respect to the extension axis Y of the guide channel 8 into which the corresponding retaining element 9 is inserted and with respect to the reference axis X of the housing seat 6 into which the retaining portion 3 of the corresponding tie-rod element 2 is inserted.

In particular, the thrust surface 23 of the engagement tooth 13 is substantially parallel to the corresponding dragging surface 12.

Advantageously, in accordance with a possible embodiment, the retaining portion 3 of each tie-rod element 2 is inserted into the corresponding housing seat 6 with clearance in directions orthogonal to the reference axis X of the housing seat 6 itself.

Furthermore, the sliding surface 12 of the retaining portion 3 of each tie-rod element 2 advantageously extends along:
- a first direction perpendicular to the reference axis X of the corresponding housing seat 6 and to the extension axis Y of the guide channel 8 in which the corresponding retaining element 9 is slidably inserted, and along
- a second direction orthogonal to the first direction and inclined with respect to the extension axis Y of the guide channel 8 into which the corresponding retaining element 9 is inserted and with respect to the reference axis X of the housing seat 6 into which the retaining portion 3 of the corresponding tie-rod element 2 is inserted.

In this way, when the retaining elements 9 are moved from the release position to the retaining position, they do not drag the retaining portion 3 towards the centre of the respective housing seat 6, but cause the retaining portion 3 to maintain exactly the same position along a direction orthogonal to the reference axis X of the respective housing seat 6 and to the extension axis Y of the guide channel 8 in which the corresponding retaining element 9 is placed, since the dragging surface 12 extending along the first direction perpendicular to the reference axis X can also be slightly offset with respect to the engagement tooth 13 of the corresponding retaining element 9.

This configuration of the dragging surface 12 is particularly advantageous when the tie-rod element 2 is directly connected to the semifinished product or the abutment base, because, by preventing the retaining elements 9 from drag the retaining portion 3 of the corresponding tie-rod elements 2 towards the centre of the housing seat 6, it is prevented that the retaining elements 9 in retaining position can exert compressive or tensile forces on the semifinished product through the tie-rod element 2 connected to it.

Advantageously, the shoulder 10 of the retaining portion 3 of each tie-rod element 2 is provided with a plurality of dragging teeth 14, on each of which a corresponding dragging surface 12 extends.

Furthermore, each retaining element 9 is preferably provided with an engagement tooth 13 for each dragging tooth 12 of the shoulder 10 of the retaining portion 3 of the corresponding tie-rod element 2.

In this way, it is possible to achieve a particularly stable and secure clamping of the retaining elements 9 in retaining position against the corresponding retaining portions 3, by employing multiple dragging teeth 14 with corresponding dragging surfaces 12 and multiple engagement teeth 13 which allow the force, with which the retaining portions 3 are locked in position, to be increased while at the same time keeping the overall sizes of the retaining portions 3 as small as possible.

In particular, the shoulder 10 of the retaining portion 3 of each tie-rod element 2 has a substantially plate-like shape and extends in thickness between the abutment face 11 and an opposite engagement face 15, on which the dragging teeth 14 are formed.

In this way, as the shoulders 10 are substantially plate-shaped, it is possible to make particularly narrow housing seats 6 on the base body 5.

Advantageously, the present clamping device 1 comprises movement means 25 arranged to move the retaining elements 9 together between the retaining position and the release position.

Preferably, the aforementioned movement means 25 are arranged to move the retaining elements 9 from the release position to the retaining position, locking each retaining element 9 when it is placed against the shoulder 10 of the retaining portion 3 of the corresponding tie-rod element 2.

More in detail, by employing movement means 25 which preferably lock the retaining elements 9 when they arrive against the shoulder 10 of the retaining portion 3 of the corresponding tie-rod element 2 during the transition from the release position to the retaining position, it is prevented that the retaining elements 9 force the retaining portions 3 of the tie-rod elements 2 along a direction parallel to or coinciding with the extension axis Y towards the centre of the corresponding housing seats 6, thereby allowing the retaining portions 3 to continue to occupy the same position within the housing seat 6.

This configuration of the movement means 25 is particularly advantageous when the tie-rod element 2 is directly connected to the semifinished product or the abutment base, since, by preventing the retaining elements 9 from dragging the retaining portion 3 of the tie-rod element 2 towards the centre of the housing seat 6, it is prevented that the retaining elements 9 in retaining position can exert compressive or tensile forces on the semifinished product through the tie-rod element 2 connected to it.

Preferably, the shoulders 10 of the retaining portions 3 of the tie-rod elements 2 are each provided with their own through-opening 33, which extends in an elongated shape along the reference axis X of the corresponding housing seat 6 and, in particular, passes through the corresponding shoulder 10 between the abutment face 11 and the engagement face 15.

Furthermore, preferably, the movement means 25 comprise an actuating screw 26, which extends along an axis of extension W parallel to the extension axes Y, mutually aligned each other, of the guide channels 8 or coinciding with the extension axes Y, mutually aligned each other, of the guide channels 8, is placed to pass through the through-openings 33 of the shoulders 10 and is rotatably connected to both retaining elements 9, to at least one of which by means of a screw-nut coupling.

In particular, the fact that the through-opening 33 of each shoulder 10 extends in an elongated shape along the reference axis X of the corresponding housing seat 6 allows the corresponding tie-rod element 2 to translate along the same housing seat 6 when the retaining elements 9 are moved between the release position and the retaining position. Operatively, when the drive screw 26 is actuated to rotated about its axis of extension W, it causes the retaining elements 9 to move closer or away from each other thanks to the screw-nut coupling with at least one of the retaining elements 9. Furthermore, operatively, when one of the retaining elements 9 places itself in contact with the shoulder 10 of the retaining portion 3 of the corresponding tie-rod element 2 while the drive screw 26 is actuated to rotated to bring both retaining elements 9 into retaining position, this retaining element 9 in contact with the shoulder 10 stops while the rotation of the drive screw 26 continues to cause the other retaining element 9 to translate, so that the retaining elements 9 in the retaining position can induce pressure at the abutment faces 11 against the corresponding block surfaces 35 and at the same time adapt to the particular position that both shoulders 10 of the retaining portions 3 occupy within the housing seats 6 along the axis of extension W, without this inducing unwanted tensile and/or compressive stresses on the semifinished product.

In accordance with, for example, the third embodiment illustrated, the drive screw 26 is rotatably connected to both retaining elements 9 by means of corresponding screw-nut couplings, of which a first screw-nut coupling 36 with an orientation selected from right-hand or left-hand, and a second screw-nut coupling 37 with a different orientation selected from right-hand and left-hand.

Differently, as illustrated with reference for example to the first and second embodiments, the drive screw 26 extends along the axis of extension W between two opposite ends 27 and is provided with a threaded portion 28, which extends at one of the two ends 27 and is inserted into a corresponding nut hole 29 made on one of the retaining elements 9, and with a head 30, which is placed at the other end 27 and is rotatably inserted into a housing bore 31 of the other retaining element 9 which is counter-shaped with respect to the head 30 itself and has a narrowed section 32 to retain the aforementioned head 30 within it. Differently, the movement means 25 can be devoid of actuating screw 26 and can therefore be made in a different manner.

For example, in the first or second embodiment in which the shoulders 10 are interposed between the retaining elements 9, the guide channels 8 of the retaining elements 9 open onto the side surface 24 of the base body 5 and the movement means 25 comprise two corresponding linear actuators (e.g. hydraulic or pneumatic), one for each retaining element 9, wherein the linear actuators are each provided with a sleeve, which is intended to be mechanically connected (directly or indirectly via other components) to the abutment base, and with a rod, which is slidably inserted into the sleeve and is mechanically connected to the corresponding retaining element 9 to move it between the release position and the retaining position.

Differently again, in the first or second embodiment in which the shoulders 10 are interposed between the retaining elements 9, the guide channels 8 of the retaining elements 9 open onto the side surface 24 of the base body 5 and the movement means 25 comprise a clamp, which is provided with a support body extending externally to the base body 5 and with two jaws mounted on the support body and arranged to act, each, against a corresponding retaining element 9, wherein at least one of these jaws is mounted in a movable manner on the support body of the clamp.

In these examples of embodiments, which do not include the drive screw 26 but linear actuators or a clamp, the arrangement of through-openings 33 is not necessary.

Advantageously, the retaining portion 3 of each tie-rod element 2 is provided with a connecting base 16 slidably inserted into the corresponding housing seat 6 along the reference axis X of above abovementioned housing seat 6, possibly also with clearance along directions orthogonal to the reference axis X (for example, to cause that the tie-rod elements 2 can place themselves with their retaining portion 3 in the corresponding housing seat 6 without inducing tensile and/or compressive stresses on the semifinished product when the retaining elements 9 are brought into retaining position).

More in detail, the connecting base 16 is provided with a first face 17, which directed towards an opposite direction with respect to the access opening 7 of the housing seat 6 into which the connecting base 16 is slidably inserted, and with an opposite second face 18.

In particular, the shoulder 10 protrudes from the first face 17 and the shank 4 protrudes from the second face 18.

Preferably, the connecting base 16 of the retaining portion 3 of each tie-rod element 2, being slidably inserted into a corresponding housing seat 6 along the reference axis X of this housing seat 6, guides the tie-rod element 2 to translate with respect to the base body 5 during the assembly or disassembly of the clamping device 1 according to the invention, or when the retaining elements 9 move from the release position to the retaining position and exert a dragging force on the corresponding tie-rod elements 2.

As illustrated for example in the attached figures, the connecting base 16 of the retaining portion 3 of each tie-rod element 2 protrudes partially from the access opening 7 of the corresponding housing seat 6 (in this case, if one tie-rod element 2 is directly connected to the abutment base and one tie-rod element 2 is directly connected to the semifinished product, the holes of the abutment base and of the semifinished product into which the shanks 4 of the tie-rod elements 2 are inserted are provided with an enlarged section arranged to contain also the part of the connecting base 16 protruding with respect to the access opening 7 of the corresponding housing seat 6).

Differently, in accordance with other embodiment variants, the connecting base 16 of the retaining portion 3 of each tie-rod element 2 does not protrude from the access opening 7 of the corresponding housing seat (in this case, if one tie-rod element 2 is directly connected to the abutment base and one tie-rod element 2 is directly connected to the semifinished product, centring rings can be used, each of which is crossed with clearance by the shank 4 of a corresponding tie-rod element 2 and is provided with a shoulder inserted substantially to size in the housing seat 6 and with a shoulder inserted substantially to size in an enlarged section of the hole made in the semifinished product or in the abutment base to centre the semifinished product or the abutment base on the body of base 5).

Advantageously, the shank 4 of each tie-rod element 2 extends along an own direction of extension Z thereof.

The direction of extension Z of the shank 4 of each tie-rod element 2 can coincide with or be parallel to the reference axis X of the housing seat 6 in which the retaining portion 3 of the corresponding tie-rod element 2 is placed.

Differently, the direction of extension Z of the shank 4 of each tie-rod element 2 can be inclined with respect to the reference axis X of the housing seat 6 in which the retaining portion 3 of the corresponding tie-rod element 2 is placed.

In particular, the connecting base 16 of the retaining portion 3 of each tie-rod element 2 is provided with a first width along directions orthogonal to the reference axis X of the housing seat 6 into which the same retaining portion 3 is inserted and, furthermore, the shank 4 of each tie-rod element 2 is provided with a second width along directions orthogonal to the direction of extension Z thereof, wherein this second width is less than the first width of the corresponding connecting base 16.

Advantageously, the base body 5 is provided with an internal surface 19 placed to delimit the housing seats 6 communicating with each other.

Furthermore, in accordance with the first and second embodiments, the first face 17 of the connecting base 16 of the retaining portion 3 of each tie-rod element 2 is provided with a free surface 20 adjacent to the shoulder 10 and defining, together with the shoulder 10 and part of the internal surface 19 of the base body 5, a containment volume 21, which contains the shoulder 10 of the retaining portion 3 of the other tie-rod element 2.

In particular, this configuration allows for particularly compact sizes and the abutment faces 11 for being placed directly against each other in the first and second embodiments. In accordance with the first, second and third embodiments illustrated in the attached figures, the abutment faces 11 of the shoulders 10 of the retaining portions 3 of the tie-rod elements 2 each extend on a reference plane orthogonal to the extension axes Y of the guide channels 8 aligned with each other.

In accordance with the first embodiment illustrated in the attached figures, the reference axes X of the housing seats 6 are aligned with each other.

In this case, therefore, the housing seats 6 define a single straight channel that crosses the base body 5 from one side to the other.

In accordance with the second embodiment illustrated in the attached figures, the reference axes X of the housing seats 6 are inclined to each other.

For example, the reference axes X of the housing seats 6 can be inclined to each other to define an obtuse angle, as visible in the figures, or to define an acute angle or a right angle.

In the second embodiment illustrated, therefore, the abutment faces 11 of the shoulders 10 of the retaining portions 3 of the two tie-rod elements 12 each extend on a reference plane which, in addition to being orthogonal to the extension axes Y of the guide channels 8 aligned with each other, is also parallel to the reference axes X, inclined to each other, of the two housing seats 6 or contains the reference axes X, inclined to each other, of the two housing seats 6.

In this case, therefore, the housing seats 6 define a split channel with two sections that crosses the base body 5.

Differently again, in accordance with the third embodiment, the reference axes X of the housing seats 6 are parallel to each other, or, in accordance with another variant not shown, they lie in planes that are parallel to each other and orthogonal to the extension axes Y, aligned with each other, of the guide channels 8.

In this case, therefore, the housing seats 6 communicate with each other via the guide channels 8 of the retaining elements 9 having the extension axes Y aligned with each other, thereby causing the housing seats 6 and the guide channels 8 to define a broken channel with three sections that crosses the base body 5.

In particular, the choice to use a clamping device 1 in accordance with the first embodiment wherein the reference axes X coincide, in accordance with the second embodiment wherein the reference axes X are inclined (for example, by an obtuse angle as visible, or by an acute angle or by a right angle) or in accordance with the third embodiment wherein the reference axes are parallel X, can depend on the particular shape of the semifinished product that is to be held in position with respect to the abutment base. In accordance with possible further embodiments not illustrated in the attached figures, one or both of the outer faces 22 of the base body 5 are not intended to be placed against the abutment base and the semifinished product.

In a possible embodiment not shown, the clamping device 1 comprises at least one first adjustment body, which is intended to be removably fixed to the abutment base or to the semifinished product by means of its own fastening means (not described more in detail here since they are generally known in the field), is mechanically connected in a movable manner to the base body 5 by means of a corresponding tie-rod element 2 and is provided with a first sliding surface directed towards the outer surface 22 of the base body 5 on which it is made the access opening 7 of the housing seat 6 from which the shank 4 of the aforementioned tie-rod element 2 protrudes.

More in detail, in this not shown embodiment, the tie-rod element 2 is provided with an enlarged head, which is placed in a containment seat of the first adjustment body, and the shank 4 of the aforementioned tie-rod element 2 extends from the corresponding retaining portion 3 to the enlarged head, crossing with clearance a connecting channel, which is made in the adjustment body, extends from the first sliding surface of the first adjustment body to the containment seat in which this enlarged head is placed, and has dimensions smaller than those of the enlarged head.

In this way, when the retaining elements 9 are in release position, the first sliding surface of the first adjustment body can slide (directly or via other components of the clamping device 1) with respect to the outer face 22 of the base body 5 to change the position of the first adjustment body with respect to the base body 5. Furthermore, when the retaining elements 9 are in the retaining position, the tie-rod element 2 drags, thanks to the enlarged head arranged in the containment seat of the first adjustment body, the first adjustment body towards the base body 5 to lock (directly or via other components of the clamping device 1) the sliding surface of this first adjustment body against the outer face 22 of the base body 5, thereby immobilising the first adjustment body with respect to the base body 5.

In particular, the first sliding surface of the first adjustment body and the outer face 22 of the base body 5 towards which this first sliding surface is directed are planar, such that, when the retaining elements 9 are in release position, the first adjustment body can slide with its first sliding surface on this outer face 22 along directions transverse to the reference axis X of the housing seat 6 in which the retaining portion 3 of the corresponding tie-rod element 2 is placed.

Differently, the first sliding surface of the first adjustment body and the outer face 22 of the base body 5 towards which this first sliding surface is directed are, one concave and one convex, and shaped like a spherical cap, such that the first adjustment body can rotate with its first sliding surface on this outer face 22 with respect to the base body 5.

Differently again, the clamping device 1 can be provided with a second adjustment body, which is interposed between the base body 5 and the first adjustment body and is provided with a second sliding surface, which is planar and placed against the outer face 22 of the base body 5 which is in turn planar, with an opposite third sliding surface, which is concave or convex with a the shape of a spherical cap and is placed against the first sliding surface of the first adjustment body which is convex or concave and in turn has a shape of a spherical cap, and with a passage channel, which extends from the second sliding surface to the third sliding surface and is crossed with clearance by the shank 4 of the tie-rod element 2 having its own enlarged head is which is placed in the containment seat of the first adjustment body.

In this way, when the retaining elements 9 are in release position, the first adjustment body can rotate with respect to the second adjustment body, with the first sliding surface and the third sliding surface that slid over each other, and the second adjustment body can translate with respect to the base body 5 along directions transverse to the reference axis X of the corresponding housing seat 6, with the second sliding surface that slides over the outer face 22 having the access opening 7 of the aforementioned housing seat 6. Furthermore, when the retaining elements 9 are in retaining position, the first adjustment body is dragged towards the base body 5 such that the first adjustment body locks against the second adjustment body and the second adjustment body locks against the base body 5.

Differently again, in accordance with a further, not shown embodiment variant, the present clamping device 1 can comprise a third adjustment body, which is intended to be removably fixed to the abutment base or to the semifinished product by means of its own coupling means (not described more in detail here as they are generally known in the field), and is provided with an adjustment seat into which the base body 5 is partially inserted in a sliding manner with an outer face 22 thereof directed towards a bottom surface of said adjustment seat. In accordance with this not shown embodiment variant, the base body 5 is provided with one or more locking tabs protruding from the outer face 22 directed towards the bottom surface of the adjustment seat of the third adjustment body and flexible between an expanded configuration, in which they are pushed against an internal boundary surface of the third adjustment body that laterally defines the adjustment seat to lock the third adjustment body against the base body 5 by friction, and a shrunk configuration, in which they are not pushed against the internal boundary surface of the third adjustment body and allow the third adjustment body to slide with respect to the base body 5. Furthermore, the shank 4 of the tie-rod element 2 corresponding to this outer face 22 extends from the retaining portion 3 to a pressing body, which is shaped to flex (directly or indirectly via other components of the clamping device 1) the one or more locking tabs between the expanded configuration and the shrunk configuration with the retaining elements 9 moving between the retaining position and the release position. For example, this not shown embodiment provides for an elastic element (such as a disc spring crossed by the shank 4 of the tie-rod element 2) arranged to cooperate with the one or more locking tabs and interposed between the pressing body and the outer face 22 of the base body 5 directed towards the bottom surface of the adjustment seat of the third adjustment body. This elastic element is deformable by the pressing body between a compressed configuration, in which the elastic element has a first width to flex the one or more locking tabs towards the expanded configuration when the retaining elements 9 are in retaining configuration and drag the pressing body towards the outer face 22 of the base body 5, and an uncompressed configuration, in which the elastic element has a second width smaller than the first width to allow the one or more locking tabs to assume the shrunk configuration when the retaining elements 9 are in release position and maintain the pressing body spaced from the outer face 22 of the base body 5.

Therefore, multiple different embodiments are possible, such as one in which the clamping device 1 is provided exclusively with a first adjustment body mechanically connected to one of the semifinished product and the abutment base, one in which the clamping device 1 is provided with a first adjustment body mechanically connected to one of the semifinished product and the abutment base and with a second adjustment body interposed between the first adjustment body and the base body 5, one in which the clamping device 1 is provided with a first adjustment body mechanically connected to one of the semifinished product and the abutment base and a third adjustment body mechanically connected to the other of the semifinished product and the abutment base, one in which the clamping device 1 is provided exclusively with a third adjustment body mechanically connected to one of the semifinished product and the abutment base, one in which the clamping device 1 is provided with two first adjustment bodies, one of which is mechanically connected to one of the semifinished products and the abutment base and the other is mechanically connected to the other of the semifinished product and the abutment base, and similar other embodiments.

These embodiments, not illustrated, with first adjustment body, second adjustment body and/or third adjustment body allow, with a single movement operation of the retaining elements 9, to unlock and locking again all the aforementioned first adjustment body, second adjustment body and/or third adjustment body after an first machining operation performed on the semifinished product and before a subsequent machining operation, in order to compensate for possible residual tensile and/or compressive stresses in the material of the semifinished product due to the first machining operation.

The invention thus conceived therefore achieves the intended objects.

## Claims

1. Clamping device (1), which comprises:
- two tie-rod elements (2), each of which is provided with:
- a retaining portion (3);
- a shank (4) extending starting from said retaining portion (3);
- a base body (5), which is provided with:
- two housing seats (6), one for each said tie-rod element (2); each said housing seat (6) extending along a reference axis (X) thereof, having an access opening (7) thereof and being susceptible of receiving at its interior at least part of the retaining portion (3) of the corresponding said tie-rod element (2);
- two guide channels (8), one for each said housing seat (6); each said guide channel (8) extending along an extension axis (Y) thereof transverse to the reference axis (X) of the corresponding said housing seat (6) and communicating with the corresponding said housing seat (6);
- two retaining elements (9), one for each said guide channel (8); each said retaining element (9) being slidably inserted in the corresponding said guide channel (8) along the extension axis (Y) of said guide channel (8) between:
- a release position, in which said retaining element (9) is spaced from the retaining portion (3) of the tie-rod element (2) inserted into the corresponding said housing seat (6);
- a retaining position, in which said retaining element (3) protrudes from the corresponding guide channel (8) into the corresponding housing seat (6) to place itself against the retaining portion (3) of the corresponding said tie-rod element (2), blocking said retaining portion (3) in the corresponding said housing seat (6);
said clamping device (1) being **characterized in that** said housing seats (6) are communicating;
the retaining portion (3) of each said tie-rod element (2) being provided with a shoulder (10) alongside the shoulder (10) of the retaining portion (3) of the other said tie-rod element (2) and susceptible of receiving against itself the corresponding said retaining element (9) in the retaining position.

2. Clamping device (1) according to claim 1, **characterized in that** the retaining portion (3) of each said tie-rod element (2) is provided with a connecting base (16) slidably inserted into the corresponding housing seat (6) along the reference axis (X) of said housing seat (6);
said connecting base (16) being provided with a first face (17), which is directed towards an opposite direction with respect to the access opening (7) of the housing seat (6) in which said connecting base (16) is slidably inserted, and with an opposite second face (18);
said shoulder (10) protruding from said first face (17) and said shank (4) protruding from said second face (18).

3. Clamping device (1) according to claim 1 or 2, **characterized in that** the shoulder (10) of the retaining portion (3) of each said tie-rod element (2) is provided with an abutment face (11) directed towards a corresponding block surface (35) and susceptible of being pushed towards the corresponding said block surface (35) with the respective said retaining element (9) in the retaining position.

4. Clamping device (1) according to claim 3, **characterized in that** the shoulders (10) of the retaining portions (3) of said tie-rod elements (2) are interposed between said retaining elements (9) and the abutment faces (11) of said shoulders (10) are directed towards each other;
each said abutment face (11) being the block surface (35) for the other said abutment face (11).

5. Clamping device (1) according to claim 4, **characterized in that** the reference axes (X) of the housing seats (6) are either aligned or inclined with respect to each other.

6. Clamping device (1) according to claim 2 and claim 4 or 5, **characterized in that** said base body (5) is provided with an internal surface (19) placed to delimit said housing seats (6) communicating with each other;
the first face (17) of the connecting base (16) of the retaining portion (3) of each said tie-rod element (2) is provided with a free surface (20) adjacent to said shoulder (10) and defining, with said shoulder (10) and with part of the internal surface (19) of said base body (5), a containment volume (21), which contains the shoulder (10) of the retaining portion (3) of the other said tie-rod element (2).

7. Clamping device (1) according to claim 3, **characterized in that** said retaining elements (9) are interposed between the shoulders (10) of the retaining portions (3) of said tie-rod elements (2) and the abutment faces (11) are directed towards opposite directions to each other;
the block surface (35) which corresponds to each said abutment face (11) being placed to delimit at least partially the housing seat (6) in which the retaining portion (3) of the corresponding said tie-rod element (2) is inserted.

8. Clamping device (1) according to anyone of the preceding claims, **characterized in that** the shoulder (10) of the retaining portion (3) of each said tie-rod element (2) is provided with at least one dragging surface (12), which is:
- directed towards the guide channel (8) in which the corresponding said retaining element (9) is inserted and towards the access opening (7) of the housing seat (6) in which the retaining portion (3) of the corresponding tie-rod element (2) is inserted;
- inclined with respect to the extension axis (Y) of the guide channel (8) in which the corresponding said retaining element (9) is inserted and with respect to the reference axis (X) of the housing seat (6) in which the retaining portion (3) of the corresponding tie-rod element (2) is inserted;
each said retaining element (9) being provided with at least one engagement tooth (13) which, with said retaining element (9) in the retaining position, is placed against the dragging surface (12) of the shoulder (10) of the retaining portion (3) of the corresponding said tie-rod element (2).

9. Clamping device (1) according to claim 8, **characterized in that** the shoulder (10) of the retaining portion (3) of each said tie-rod element (2) is provided with multiple dragging teeth (14), on each of which a corresponding said dragging surface (12) extends;
each retaining element (9) being provided with a said engagement tooth (13) for each said dragging tooth (14) of the shoulder (10) of the retaining portion (3) of the corresponding said tie-rod element (2).

10. Clamping device (1) according to claim 9 and anyone of the claims from 3 to 7, **characterized in that** the shoulder (10) of the retaining portion (3) of each said tie-rod element (2) has a substantially plate-like shape and extends in thickness between said abutment face (11) and an opposite said engagement face (15), on which the dragging teeth (14) are made.
